# EUROPEAN PATENT SPECIFICATION

(11) **EP 1 800 473 B1**
(45) Date of publication and mention of the grant of the patent: **21.12.2011**
(21) Application number: 05798366.0
(22) Date of filing: 23.09.2005
(51) Int. Cl.: H04N 5/74

(54) **VIDEO PROJECTOR ILLUMINATION SYSTEM USING A PLURALITY OF IMPROVED DMD DEVICES**
VIDEOPROJEKTOR-BELEUCHTUNGSSYSTEM MIT MEHREREN VERBESSERTEN DMD-BAUELEMENTEN
SYSTEME D'ECLAIRAGE POUR PROJECTEUR VIDEO UTILISANT UNE PLURALITE DE DISPOSITIFS DMD AMELIORES

(30) Priority: 30.09.2004 IT TO20040652
(43) Date of publication of application: 27.06.2007
(73) Proprietor: SIM2 Multimedia S.p.A., 33170 Pordenone (IT)
(72) Inventor: BARAZZA, Giorgio, I-33077 Sacile (PN) (IT); FRISON, Renato, I-33083 Taiedo di Chions (PN) (IT)
(74) Representative: Dini, Roberto
(86) International application number: PCT/IB2005/002821
(87) International publication number: WO 2006/035279

(56) References cited:
- US-A1- 2001 024 268
- US-A1- 2003 063 263
- US-A1- 2003 214 639
- US-B1- 6 357 878

## Description

The present invention relates to a video projector illumination system using a plurality of devices being known as DMDs (Digital Micromirror Devices). Hereafter these devices will always be referred to with the acronym DMD, which stands for Digital Micromirror Device. A DMD device, or panel, substantially consists of an array of small square mirrors, typically made of aluminum, having a side approx. 14 µm long, each of which represents an element of the image to be projected, in short a pixel. The mirrors can rotate round a diagonal at a certain angle, e.g. ±12 degrees, and the rotation in either direction is produced by two electrodes located under the mirror, on opposite sides with respect to the axis of rotation.

The light hits the mirror at an angle of approx. 26 degrees with respect to the perpendicular of the mirror plane, when the latter is in the "at rest" or "flat" state, i.e. when it is not attracted by any of the two electrodes. In known devices, when the mirror is turned in a direction, the light hitting it is reflected in such a way as to not enter the projection lens and therefore is not sent to the screen, so that the pixel is inactive, i.e. "off"; when the rotation takes place in the opposite direction, the pixel is "on", in that the reflected light is sent to the screen.

When it is necessary to obtain a very high level of brightness, e.g. if big screens are desired, the projector uses a plurality of DMD devices, e.g. three devices; in this case, the light generated by a lamp is broken-up into the three main monochromatic components (red, green and blue) according to known techniques, and each of said monochromatic components is sent to a different DMD device.

In order to increase the contrast of the illumination system, it is appropriate to prevent the light reflected by the "off' or "at rest" pixels of a DMD device, by spreading into the prisms composing the system optics, from entering the projection lens and being sent to the screen.

Documents US 2001/0021268 and US 6,357,878 relate to illumination systems for videoprojectors comprising one or more DMD arranged to spatially modulate the light incident on the mirror elements or pixels, a totally internally reflecting surface arranged to direct the light to said one or more DMD, and a visible light absorbing member apt to absorb the light reflected by the "off' pixels of said one or more DMD.

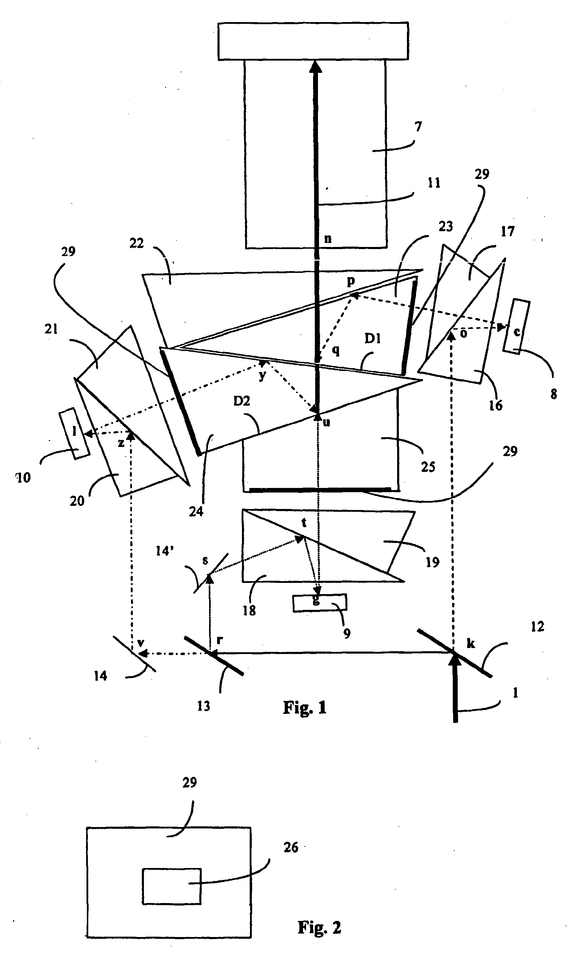

Moreover, the Patent Application No. T02003A000676 in the name of the present Applicant describes a video projector illumination system employing a plurality of DMD devices; said system will hereafter be described with reference to Fig. 1.

A light beam 1 consisting of white light is made homogeneous and focused by means of known methods not indicated in the illustration; said light beam 1 is sent to a dichroic filter 12, which reflects the green and blue monochromatic components towards a dichroic filter 13 and transmits the red monochromatic component.

Said red monochromatic component, by following the path k-o-c-p-q-n indicated a broken line and arrows, is sent by a TIR-type prism 16, being associated with a prism 17, to the DMD device 8, from which it is then reflected towards a TIR-type prism 23, being associated with a prism 22.

The TIR prism 23 reflects the red monochromatic component towards the point q, which is located on the surface of the TIR prism 23 facing a TIR prism 24; this surface represents a dichroic filter D1 which reflects the red monochromatic component and transmits the green and blue ones, so that the red monochromatic component is reflected from the point q towards n and then towards a projection lens 7.

The light beam formed by the green and blue monochromatic components, after having been reflected by the dichroic filter 12, meets the dichroic filter 13, which transmits the blue monochromatic component and reflects the green monochromatic component towards a mirror 14'. The latter component, by following the path r-s-t-g indicated with a dotted line and arrows, is reflected by the mirror 14' towards a TIR prism 18, being associated with a prism 19, and is then sent to a DMD device 9.

The DMD device 9 reflects the green monochromatic component towards a prism 25; the surface of the TIR prism 24 facing the prism 25 represents a dichroic filter D2 which reflects the blue monochromatic component and transmits the green one, so that the green monochromatic component can reach the point n and then the projection lens 7 through the path g-u-q-n.

The blue monochromatic component, after having passed through the dichroic filter 13, is reflected by a mirror 14 and then, by following the path v-z-l-y-u-q-n indicated with a dash-dot line and arrows, is sent by a TIR prism 20, being associated with a prism 21, towards a DMD device 10, and then towards the TIR prism 24, being associated with the TIR prism 23, To sum up, the break-up of the light beam 1 into the primary monochromatic components (red, green and blue) occurs through the use of two dichroic filters 12 and 13; each of said monochromatic components is then sent to one of the three TIR prisms 16, 18, 20, each of which is associated with a DMD device 8, 9, 10.

The re-formation of the primary monochromatic components reflected by the three DMD devices 8, 9, 10 into a single light beam 11 takes place by using:
- a first dichroic filter D1, obtained on the surface of the TIR prism 23 facing the TIR prism 24, which reflects the red monochromatic component and transmits the green and blue monochromatic components;
- a second dichroic filter D2, obtained on the surface of the TIR prism 24 facing the TIR prism 25, which reflects the blue monochromatic component and transmits the green monochromatic component;
- a first TIR prism 23 which directs the red monochromatic component towards the point q, so that it can be reflected by the dichroic filter D1 towards the projection lens 7;
- a second TIR prism 24 which reflects the blue monochromatic component towards the dichroic filter D2, which reflects it towards the point q and, consequently, towards the projection lens 7.

The green monochromatic component, coming from the DMD device 9, is transmitted by the dichroic filters D1 and D2; it is thus re-formed with the blue monochromatic component at the point u being present on the dichroic filter D2 and with the red monochromatic component at the point q being present on the dichroic filter D1. In this way the monochromatic components are re-formed into a single light beam 11.

The surfaces 29 of the first TIR prisms 23, 24 and of the prism 25 facing the DMD devices 8, 10 and 9, respectively, and highlighted in Fig. 1 with a thicker line, are each treated as schematized in the front view of Fig. 2; each of said surfaces 29 has an optical aperture 26 adapted to control the dimensions of the light beam of every monochromatic component sent by each DMD device 8, 9, 10 to the projection lens 7 and to prevent the light diffused by inactive elements, i.e. the "off" or "at rest" pixels of each DMD device 8, 9, 10, from reaching the projection lens 7, thereby causing a reduction of the contrast.

Moreover, each optical aperture 26 is treated in such a way as to be able to filter any spurious chromatic components being present in the monochromatic components reflected by the DMD devices 8, 9, 10, thereby making the reproduced colours more pure.

The known illumination system represented in Fig. 1 however has some drawbacks.

A first drawback consists in the fact that the above illumination system provides an effective blocking of the diffused components of the red and blue monochromatic components, but does not ensure the same effectiveness for the green monochromatic component, which, as known, from a photometric viewpoint represents the most important part of the light beam. Another drawback consists in the fact that the treatment of the surfaces 29 of the TIR prisms 23, 24 and of the prism 25, which face the DMD devices 8, 10 and 9, respectively, is difficult to implement and consequently rather costly.

The treatment of the optical apertures 26 for filtering the spurious chromatic components being present in the monochromatic components reflected by the DMD, devices 8, 9; 10 is also particularly costly and cannot be easily modified according to the user's requirements. Furthermore, said optical apertures 26 do not provide an optimal efficiency.

The object of the present invention is to provide a video projector illumination system which, by eliminating the above drawbacks, allows to produce video projectors having a simple construction and offering at the same time higher performance, in particular concerning the image contrast.

A further object of the present invention is to provide an illumination system allowing for a more effective reduction of the light reflected by inactive, i.e. "off" or "at rest", pixels of the DMD devices.

A further object of the present invention is to provide an illumination system allowing for a reduction of the spurious components in the primary monochromatic components being more effective, less costly and more flexible, in that more suited to satisfying the users' requirements.

In order to attain said objects, the present invention relates to a video projector illumination system having the features described in the annexed claims, which form an integral part of the present description.

Further objects and advantages of the present invention will become apparent from the following detailed description and annexed drawings, which are supplied by way of nonlimiting example, wherein:
- Fig. 1 shows a known illumination system;
- Fig. 2 shows a detail of the illumination system of Fig. 1;
- Fig. 3 shows a first embodiment of the illumination system according to the present invention;
- Fig. 4 shows a second embodiment of the illumination system according to the present invention.

Note that the blocks identified by same reference number in the different figures have the same functions.

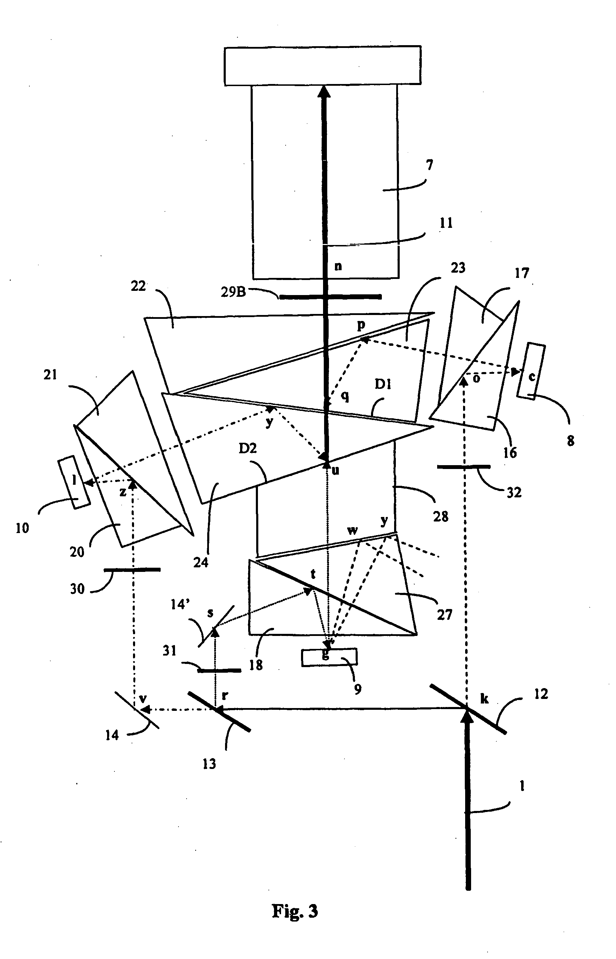

Fig. 3 shows a first embodiment of a video projector illumination system according to the present invention.

In said illumination system, the light beam 1 consists of white light and is broken-up into the red, green and blue monochromatic components in the same way as described with reference to Fig. 1. Also the optical paths of the monochromatic components substantially correspond to those described with reference to Fig. 1.

The red monochromatic component, after having passed through the dichroic filter 12, meets a dichroic filter 32, which is treated in such a way as to transmit the pure chromatic component and to reflect any spurious chromatic components of said red monochromatic component.

After having passed through the dichroic filter 32, the red monochromatic component follows the path o-c-p-q as described with reference to Fig. 1.

The blue monochromatic component, after having passed through the dichroic filter 13, is reflected by the mirror 14 and meets a dichroic filter 30, which is treated in such a way as to transmit the pure chromatic component and to reflect any spurious chromatic components of said blue monochromatic component. After having passed through the dichroic filter 30, the blue monochromatic component follows the path z-1-y-u-q.

The green monochromatic component, after having been reflected by the dichroic filter 13, meets a dichroic filter 31, which is treated in such a way so as to transmit the pure chromatic component and to reflect any spurious chromatic components of said green monochromatic component.

The dichroic filters 30, 31 and 32, being inserted along the optical paths of the primary monochromatic components (red, green and blue) before the respective DMD devices 8, 9, 10, thus allow to eliminate any spurious chromatic components being present in said primary monochromatic components.

These filters are certainly less expensive than those used in the illumination system described with reference to Fig. 1, in that they are not obtained by treatment of prism surfaces, but by treatment of flat dichroic filters; moreover, this configuration is very flexible because the responses of the filters can be easily adapted to the users' requirements.

After having passed through the dichroic filter 31, the green monochromatic component free from spurious chromatic components is reflected by the mirror 14' towards the TIR prism 18 and thus towards the DMD device 9.

Said TIR prism 18 is associated, according to the present invention, with a TIR prism 27, which in turn is associated with a prism 28 through an appropriate sizing of the air layer between the surfaces of said TIR prism 27 and said prism 28 facing each other.

The green monochromatic component reflected by an "on" pixel of the DMD device 9 is directed towards the projection lens 7, by following the optical path g-u-q-n already described with reference to Fig. 1; on the contrary, a ray reflected by an "at rest" pixel of the DMD device 9 is reflected along the path g-w and is then diverted by the TIR prism 27 so that it cannot reach the projection lens 7 and therefore the screen (not shown in the illustrations).

Besides, Fig. 3 clearly shows that a ray reflected by an "off' pixel of the DMD device 9 follows the path g-y and is diverted by the TIR prism 27 so that it cannot reach the projection lens 7.

Also in the embodiment of Fig. 3, the primary monochromatic components, after having been reflected by the respective DMD devices 8, 9 and 10, are re-formed at the point q being present on the dichroic filter D1 so as to form a single light beam 11.

In order to prevent also the parasitic components of the red and blue monochromatic components reflected by the "at rest" and/or "off" pixels of the DMDs 8 and 10, in any case having a lower intensity than the parasitic component of the green monochromatic component, from reaching the projection lens 7 and thus the screen, a surface 29B being similar to the one depicted in Fig. 2 is inserted along the optical path q-n of the re-formed light beam 11, before the latter enters the projection lens 7.

Said surface 29B preferably consists of a flat dichroic filter and comprises an aperture, e.g. having a rectangular shape, which only lets through the light reflected by the "on" pixels of the DMD devices 8 and 10, whereas the light diffused by the "off" or "at rest" pixels is blocked by the remaining part of the surface 29B.

Said aperture is therefore adapted to control the dimensions of the light beam 11 and of each of its monochromatic components, in particular of the red and blue monochromatic components, being sent by the DMD devices 8 and 10 towards the projection lens 7; therefore, said surface 29B allows to prevent the light diffused by the inactive, i.e. "off" or "at rest", pixels of said DMD devices 8 and 10 from reaching the projection lens 7, thereby causing a reduction of the contrast.

Thanks to the use of the TIR prism 27 and of the surface 29B, it is thus possible to attain a remarkable increase of the contrast of the video projector illumination system being the object of the present invention, in that no parasitic components of the primary monochromatic components, in particular of the green monochromatic component, can reach the projection lens 7 and consequently the screen.

It is clear that many changes can be made to the video projector illumination system being the object of the present invention without departing from the spirit of novelty of the innovative idea.

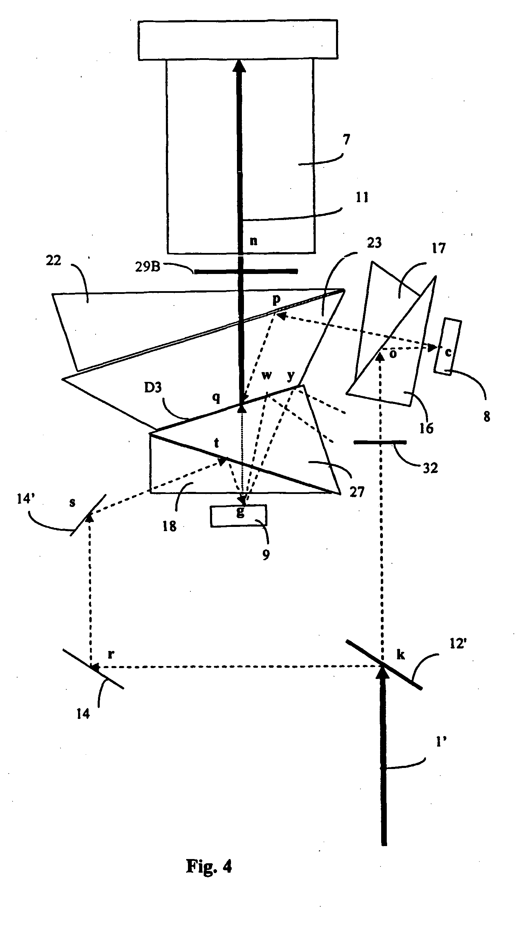

For instance, Fig. 4 shows a video projector illumination system according to the invention, which employs two DMD devices 8 and 9.

In this case, the light beam 1' is made up, in succession, by a yellow light beam, formed by the red and green monochromatic components, and by a magenta light beam, formed by the red and blue monochromatic components.

Said yellow and magenta light beams are obtained in a known way, by directing a white light beam to a colour wheel, not shown in Fig. 4, which in this case is divided into two sectors; the first of said sectors consists of a dichroic filter reflecting the blue monochromatic component and transmitting the yellow light beam 1', whereas the second one consists of a dichroic filter reflecting the green monochromatic component and transmitting the magenta light beam 1B. After having passed through the colour wheel, the light beam 1' meets a dichroic filter 12'; said dichroic filter 12' only transmits the red monochromatic component of the light beam 1'. Said red monochromatic component then meets the dichroic filter 32, which eliminates any spurious components of the red monochromatic component.

After having passed through the dichroic filter 32, the red monochromatic component meets the TIR prism 16 and is then reflected towards the DMD device 8 and from this towards the TIR prism 23, being associated with the prism 22.

The TIR prism 23 reflects the red monochromatic component towards the point q, which is located on the surface of the TIR prism 23 facing the TIR prism 27; this surface represents a dichroic filter D3 which reflects the red monochromatic component and transmits the green and blue ones, so that the red monochromatic component is reflected from the point q towards the projection lens 7.

The green and blue monochromatic components, being a part of light beams sent in succession to the dichroic filter 12', are also reflected in succession by the dichroic filter 12' towards the reflecting surfaces 14 and 14', which in turn direct them towards the TIR prism 18 and thus towards the DMD device 9.

The TIR prism 27, being associated with the TIR prism 23, allows the rays reflected by the "on" pixels of the DMD device 9 to reach the projection lens 7 by following the optical path g-q-n. The rays reflected by the "at rest" or "off" pixels of the DMD device 9, respectively following the paths g-w and g-y, are diverted by the TIR prism 27 towards areas being far from the projection lens 7.

The primary monochromatic components, after having been reflected by the respective DMD devices 8 and 9, are re-formed at the point q being present on the dichroic filter D3, so as to form a single light beam 11.

In order to prevent also the parasitic components of the red monochromatic component, being reflected by the "at rest" and/or "off" pixels of the DMD device 8, from reaching the projection lens 7 and thus the screen, the surface 29B already described with reference to the illumination system embodiment of Fig. 3 is inserted along the optical path q-n of the light beam 11, before the latter enters the projection lens 7.

Also in this case, the aperture, e.g. having a rectangular shape, of said surface 29B is adapted to control the dimensions of the light beam 11 and of every monochromatic component making up said light beam 11, in particular the red monochromatic component sent by the DM device 8 towards the projection lens 7; therefore, said surface 29B prevents the light diffused by the inactive, i.e. "off" or "at home", pixels of the DMD devices 8 and 9, in particular of said DMD device 8, from reaching the projection lens 7, thereby causing a reduction of the contrast.

Also in the embodiment example of Fig. 4, regarding a video projector illumination system using two DMD devices 8 and 9, it is therefore possible to obtain a remarkable increase of contrast, in that the light reflected by the inactive, i.e. "off" or "at rest", pixels of every DMD device 8 and 9 is prevented from reaching the projection lens 7B and consequently the screen. It is clear that many other variations and applications of the video projector illumination systems described herein by way of example are possible for those skilled in the art, as well as that in the practical realization of the invention the components may have shapes and dimensions being different from those described or be replaced with other technically equivalent elements.

## Claims

1. Video projector illumination system, comprising:
- a light beam (1, 1');
- first means (12, 12', 13) adapted to break-up said light beam (1, 1') into a plurality of monochromatic components;
- a plurality of mirrors (14, 14') and of TIR prisms (16, 18, 20) adapted to direct said monochromatic components towards a plurality of DMD devices (8, 9, 10), each of which is adapted to reflect one of said monochromatic components;
- second means (D1, D2, D3, 22, 23, 24, 28) adapted to re-form said monochromatic components coming from said DMD devices (8, 9, 10) into a light beam (11) to be sent to a projection lens (7);
- third means (27, 29B) adapted to prevent the light diffused by inactive elements of said DMD devices (8, 9, 10) from reaching said projection lens (7) and to direct the light diffused by active elements of said DMD devices (8, 9, 10) towards the projection lens (7),
**characterized in that**
said third means (27, 29B) are distinct and separate from said first means (12, 12', 13) and said second means (D1, D2, D3, 22, 23, 24, 28) and comprise a further TIR prism (27) associated with at least one of said DMD devices (8, 9, 10), in particular a DMD device (9) adapted to reflect a green monochromatic component, said further TIR prism (27) being positioned adjacent to one of said TIR prisms which face the respective DMD devices, and downstream said at least one DMD device (8, 9, 10) with respect to the path of said monochromatic components towards the projection lens (7).

2. Video projector illumination system according to claim 1, **characterized in that** said third means (27, 29B) comprise a surface (29B) having an aperture adapted to control the dimensions of said light beam (11).

3. Video projector illumination system according to the previous claim, **characterized in that** said surface (29B) consists of a flat dichroic filter.

4. Video projector illumination system according to the previous claim, **characterized in that** said flat dichroic filter is inserted along an optical path (q-n) of the re-formed light beam (11) before it enters said projection lens (7).

5. Video projector illumination system according to claim 3, **characterized in that** said aperture has a rectangular shape.

6. Video projector illumination system according to claim 1, **characterized in that** said first means (12, 12', 13) comprise dichroic filters (12, 12', 13).

7. Video projector illumination system according to the previous claim, **characterized in that** each DMD device (8, 9, 10) is associated with one of said TIR prisms (16, 18, 20).

8. Video projector illumination system according to claim 1, **characterized in that** said second means (D1, D2, D3, 22, 23, 24, 28) comprise dichroic filters (D1, D2, D3).

9. Video projector illumination system according to claim 1, **characterized in that** said second means (D1, D2, D3, 22, 23, 24, 28) comprise TIR prisms (23, 24).

10. Video projector illumination system according to claim 1, **characterized in that** the video projector uses three DMD devices (8, 9, 10).

11. Video projector illumination system according to claim 1, **characterized in that** the video projector uses two DMD devices (8, 9).

12. Video projector illumination system according to claim 1, **characterized in that** said system comprises fourth means (30, 31, 32) adapted to eliminate any spurious chromatic components being present in said monochromatic components.

13. Video projector illumination system according to the previous claim, **characterized in that** said fourth means (30, 31, 32) comprise a dichroic filter (30, 31, 32).

14. Video projector illumination system according to the previous claim, **characterized in that** said dichroic filter (30, 31, 32) is inserted along the optical path of the monochromatic component before said monochromatic component reaches the associated DMD device (8, 9, 10).

## Patentansprüche

1. Videoprojektor-Beleuchtungssystem, umfassend:
- einen Lichtstrahl (1, 1');
- erste Mittel (12, 12', 13), die angepasst sind, den Lichtstrahl (1, 1') in eine Vielzahl monochromatische Komponenten aufzuspalten;
- eine Vielzahl Spiegel (14, 14') und TIR-Prismen (16, 18, 20), die angepasst sind, die monochromatischen Komponenten zu einer Vielzahl DMD-Bauelemente (8, 9, 10) zu leiten, die jeweils angepasst sind, eine dieser monochromatischen Komponenten zu reflektieren;
- zweite Mittel (D1, D2, D3, 22, 23, 24, 28), die angepasst sind, aus den monochromatischen Komponenten, die von den DMD-Bauelementen (8, 9, 10) kommen, wieder einen Lichtstrahl (11) zu bilden, der zu einer Projektionslinse (7) zu leiten ist;
- dritte Mittel (27, 29B), die angepasst sind, zu verhindern, dass das Licht, das von inaktiven Elementen der DMD-Bauelemente (8, 9, 10) gestreut wurde, die Projektionslinse (7) erreicht, und das Licht, das von aktiven Elementen der DMD-Bauelemente (8, 9, 10) gestreut wurde, zur Projektionslinse (7) zu leiten,
**dadurch gekennzeichnet, dass**
die dritten Mittel (27, 29B) verschieden und getrennt von den ersten Mitteln (12, 12', 13) und den zweiten Mitteln (D1, D2, D3, 22, 23, 24, 28) sind und ein weiteres TIR-Prisma (27) umfassen, das mindestens einem der DMD-Bauelemente (8, 9, 10) zugehörig ist, insbesondere einem DMD-Bauelement (9), das angepasst ist, eine grüne monochromatische Komponente zu reflektieren, wobei das weitere TIR-Prisma (27) benachbart zu einem der TIR-Prismen positioniert ist, die den jeweiligen DMD-Bauelementen zugewandt sind, und in Bezug auf den Weg der monochromatischen Komponenten zur Projektionslinse (7) hin dem mindestens einen DMD-Bauelement (8, 9, 10) nachgeschaltet ist.

2. Videoprojektor-Beleuchtungssystem nach Anspruch 1, **dadurch gekennzeichnet, dass** die dritten Mittel (27, 29B) eine Fläche (29B) umfassen, die eine Öffnung aufweist, die angepasst ist, die Dimensionen des Lichtstrahls (11) zu regeln.

3. Videoprojektor-Beleuchtungssystem nach dem vorhergehenden Anspruch, **dadurch gekennzeichnet, dass** die Fläche (29B) aus einem flachen Spektralfilter besteht.

4. Videoprojektor-Beleuchtungssystem nach dem vorhergehenden Anspruch, **dadurch gekennzeichnet, dass** das flache Spektralfilter entlang einem Strahlengang (q-n) des neu gebildeten Lichtstrahls (11) eingefügt ist, bevor dieser in die Projektionslinse (7) eintritt.

5. Videoprojektor-Beleuchtungssystem nach Anspruch 3, **dadurch gekennzeichnet, dass** die Öffnung eine rechteckige Form aufweist.

6. Videoprojektor-Beleuchtungssystem nach Anspruch 1, **dadurch gekennzeichnet, dass** die ersten Mittel (12, 12', 13) Spektralfilter (12, 12', 13) umfassen.

7. Videoprojektor-Beleuchtungssystem nach dem vorhergehenden Anspruch, **dadurch gekennzeichnet, dass** jedes DMD-Bauelement (8, 9, 10) einem der TIR-Prismen (16, 18, 20) zugehörig ist.

8. Videoprojektor-Beleuchtungssystem nach Anspruch 1, **dadurch gekennzeichnet, dass** die zweiten Mittel (D1, D2, D3, 22, 23, 24, 28) Spektralfilter (D1, D2, D3) umfassen.

9. Videoprojektor-Beleuchtungssystem nach Anspruch 1, **dadurch gekennzeichnet, dass** die zweiten Mittel (D1, D2, D3, 22, 23, 24, 28) TIR-Prismen (23, 24) umfassen.

10. Videoprojektor-Beleuchtungssystem nach Anspruch 1, **dadurch gekennzeichnet, dass** der Videoprojektor drei DMD-Bauelemente (8, 9, 10) verwendet.

11. Videoprojektor-Beleuchtungssystem nach Anspruch 1, **dadurch gekennzeichnet, dass** der Videoprojektor zwei DMD-Bauelemente (8, 9) verwendet.

12. Videoprojektor-Beleuchtungssystem nach Anspruch 1, **dadurch gekennzeichnet, dass** das System vierte Mittel (30, 31, 32) umfasst, die angepasst sind, jegliche unerwünschte chromatische Komponenten zu entfernen, die in den monochromatischen Komponenten vorhanden sind.

13. Videoprojektor-Beleuchtungssystem nach dem vorhergehenden Anspruch, **dadurch gekennzeichnet, dass** die vierten Mittel (30, 31, 32) ein Spektralfilter (30, 31, 32) umfassen.

14. Videoprojektor-Beleuchtungssystem nach dem vorhergehenden Anspruch, **dadurch gekennzeichnet, dass** das Spektralfilter (30, 31, 32) entlang dem Strahlengang der monochromatischen Komponente eingefügt ist, bevor die monochromatische Komponente das zugehörige DMD-Bauelement (8, 9, 10) erreicht.

## Revendications

1. Système d'éclairage pour projecteur vidéo, comprenant:
- un faisceau de lumière (1, 1') ;
- des premiers moyens (12, 12', 13) adaptés pour séparer ledit faisceau de lumière (1,1') en une pluralité de composantes monochromatiques ;
- une pluralité de miroirs (14, 14') et de prismes TIR (à Réflexion Totale) (16, 18, 20) adaptés pour diriger lesdites composantes monochromatiques vers une pluralité de dispositifs DMD (Matrice de Micro-Miroirs) (8, 9, 10), dont chacun est adapté pour réfléchir l'une desdites composantes monochromatiques ;
- des deuxièmes moyens (D1, D2, D3, 22, 23, 24, 28) adaptés pour reconstituer lesdites composantes monochromatiques provenant desdits dispositifs DMD (8, 9, 10) en un faisceau de lumière (11) à transmettre vers une lentille de projection (7) ;
- des troisièmes moyens (27, 29B) adaptés pour empêcher la lumière diffusée par les éléments inactifs desdits dispositifs DMD (8, 9, 10) d'atteindre ladite lentille de projection (7) et de diriger la lumière diffusée par les éléments actifs desdits dispositifs DMD (8, 9, 10) vers la lentille de projection (7),
**caractérisé en ce que**
lesdits troisièmes moyens (27, 29B) sont distincts et séparés desdits premiers moyens (12, 12', 13) et desdits deuxièmes moyens (D1, D2, D3, 22, 23, 24, 28) et comprennent un prisme TIR supplémentaire (27) associé à au moins l'un desdits dispositifs DMD (8, 9, 10), en particulier un dispositif DMD (9) adapté pour réfléchir une composante monochromatique verte, ledit prisme TIR supplémentaire (27) étant positionné de façon adjacente à l'un desdits prismes TIR qui font face aux dispositifs DMD respectifs et étant positionné en aval dudit au moins un dispositif DMD (8, 9, 10) par rapport à la trajectoire desdites composantes monochromatiques vers la lentille de projection (7).

2. Système d'éclairage pour projecteur vidéo selon la revendication 1, **caractérisé en ce que** lesdits troisièmes moyens (27, 29B) comprennent une surface (29B) présentant une ouverture adaptée pour commander les dimensions dudit faisceau de lumière (11).

3. Système d'éclairage pour projecteur vidéo selon la revendication précédente, **caractérisé en ce que** ladite surface (29B) est constituée d'un filtre plat dichroïque.

4. Système d'éclairage pour projecteur vidéo selon la revendication précédente, **caractérisé en ce que** le filtre dichroïque plat est inséré le long d'une trajectoire optique (q-n) du faisceau de lumière reconstitué (11) avant qu'il n'entre dans ladite lentille de projection (7).

5. Système d'éclairage pour projecteur vidéo selon la revendication 3, **caractérisé en ce que** ladite ouverture présente une configuration rectangulaire.

6. Système d'éclairage pour projecteur vidéo selon la revendication 1, **caractérisé en ce que** lesdits premiers moyens (12, 12', 13) comportent des filtres dichroïques (12, 12', 13).

7. Système d'éclairage pour projecteur vidéo selon la revendication précédente, **caractérisé en ce que** chaque dispositif DMD (8, 9, 10) est associé à l'un desdits prismes TIR (16, 18, 20).

8. Système d'éclairage pour projecteur vidéo selon la revendication 1, **caractérisé en ce que** lesdits deuxièmes moyens (D1, D2, D3, 22, 23, 24, 28) comprennent des filtres dichroïques (D1, D2, D3).

9. Système d'éclairage pour projecteur vidéo selon la revendication 1, **caractérisé en ce que** lesdits deuxièmes moyens (D1, D2, D3, 22, 23, 24, 28) comprennent des prismes TIR (23, 24).

10. Système d'éclairage pour projecteur vidéo selon la revendication 1, **caractérisé en ce que** le projecteur vidéo utilise trois dispositifs DMD (8, 9, 10).

11. Système d'éclairage pour projecteur vidéo selon la revendication 1, **caractérisé en ce que** le projecteur vidéo utilise deux dispositif DMD (8, 9).

12. Système d'éclairage pour projecteur vidéo selon la revendication 1, **caractérisé en ce que** ledit système comporte des quatrièmes moyens (30, 31, 32) adaptés pour éliminer une quelconque composante chromatique parasite présente dans lesdites composantes monochromatiques.

13. Système d'éclairage pour projecteur vidéo selon la revendication précédente, **caractérisé en ce que** lesdits quatrièmes moyens (30, 31, 32) comportent un filtre dichroïque (30, 31, 32).

14. Système d'éclairage pour projecteur vidéo selon la revendication précédente, **caractérisé en ce que** ledit filtre dichroïque (30, 31, 32) est inséré le long de la trajectoire optique de la composante monochromatique avant que ladite composante monochromatique n'atteigne le dispositif DMD associé (8, 9, 10).
